# EUROPÄISCHE PATENTANMELDUNG

(11) **EP 0 609 505 A2**
(43) Veröffentlichungstag der Anmeldung: **10.08.1994**
(21) Anmeldenummer: 93118699.3
(22) Anmeldetag: 20.11.1993
(51) Int. Cl.: C14C 9/00, D06M 15/01, C14C 9/02

(54) **Wasserabweisendes Pflegemittel**

(30) Priorität: 20.01.1993 DE 4301297
(71) Anmelder: TAPIR GmbH, D-37586 Dassel-Amelsen (DE)
(72) Erfinder: Rengshausen, Bodo, D-37586 Dassel-Amelsen (DE); Gebauer, Ludwig, Dipl.-Chem., D-38528 Adenbüttel (DE)
(74) Vertreter: Minderop, Ralph H., Dr. rer. nat.

(57) **Zusammenfassung**

Eine wasserabweisende Imprägnieremulsion für Leder, Stoffe und Gewebe enthält 1 bis 15 Gew.% einer Fettphase, 1 bis 30 Gew.% einer oder mehrerer Substanzen auf der Grundlage organischer Säuren eines Molekulargewichts ≧ 140, ausgewählt aus der Gruppe, enthaltend Kolophonium, Schellack, Dammarharz, Stearin und bei der Verseifung obiger Fettphasen und Harze entstehenden Fettsäuren sowie Fettsäuregemische, und Wasser.

## Beschreibung

Die Erfindung betrifft Emulsionen zur wasserabweisenden Imprägnierung von Ledern, Stoffen und Geweben.

Leder wird wegen seines guten Wasserdampfabsorptionsvermögen seit je her als Grundstoff zur Herstellung von Kleidungsstücken, insbesondere auch Schuhen und Handschuhen geschätzt. Andererseits ist es als natürliches Material feuchtigkeitsempfindlich, weshalb die Imprägnierung durch geeignete Lederpflegemittel empfohlen wird. Zu unterscheiden sind bei Lederpflegemitteln sogenannte Ölwaren, ölfreie Emulsionen und Aerosole, wobei letztere Hauptsächlich der Imprägnierung dienen und je nach zugesetzten Inhaltsstoffen auch den übrigen wasserabstoßende Eigenschaften verliehen werden können.

Nach Grünler, Leder 7, 174 (1965) stehen für die verschiedenen Imprägnierungsverfahren folgende Hilfsmittel zur Verfügung. Fettstoffe, Paraffine, natürliche und künstliche Wachse und Harze, die flüssig bzw. geschmolzen durch Tauchen oder Einreiben auf das Leder gebracht werden. Kationaktive Kondensationsprodukte mit Fixierwirkung, die meist in wäßriger Lösung eingewalkt werden. Natürliche und künstliche Wachse und Harze, Polymerisate, Polykondensate, Kautschuk, Silikone, Metalloxidester, die in organischen Lösungsmitteln gelöst, durch Stauchen oder Spritzen aufgebracht werden. Ferner können Leder mit Kautschuklatizes oder wäßrigen Dispersionen von Polymerisaten oder Paraffin-Metallseifen durch Einwalken oder Besprühen imprägniert werden.

Bereits verarbeitete Leder werden bisher zur Imprägnierung oder Hydrophobierung mit Silikonen, Fluorverbindungen und Melamin/Formaldehydharzen, ggf. unter Verwendung synthetischer Emulgatoren, behandelt, die insbesondere als Aerosol mit erheblichen Umweltbelastungen verbunden sind.

Es ist deshalb Aufgabe der Erfindung, ein Imprägniermittel für Leder, Stoffe und andere Gewebe bereitzustellen, das weitgehend auf der Basis nachwachsender Rohstoffe aufgebaut und bekannten, auf obigen nicht natürlichen Inhaltsstoffen bestehenden Zubereitungen überlegen ist.

Diese Aufgabe wird durch eine Imprägnieremulsion gelöst, die etwa 1 bis 15 Gew.% Fettphase, 1 bis 30 Gew.% Terpenlösungsmittel, etwa 0,1 bis 10 Gew.% einer oder mehrerer Substanzen eines Molekulargewichts ≧ 140, ausgewählt aus der Gruppe, enthaltend Kolophonium, Schellack, Dammarharz, Stearin und der bei der Verseifung obiger Fettphasen und Harze entstehenden Fettsäuren sowie Fettsäuregemische, und Wasser enthält.

Diese Zusammensetzung ermöglicht eine stabile Emulsion ohne den Zusatz synthetisch hergestellter Tenside über einen langen Zeitraum. Sie eignet sich auch zur Behandlung von Baumwollgeweben, Wollstoffen, Mischgeweben, Leinen und Jute.

Als Fettphase werden trocknende oder nicht trocknende pflanzliche und tierische Fette und Öle eingesetzt. Geeignet sind beispielsweise Olivenöl, Rizinusöl, Mandelöl, Kokosöl, Saflonöl, Sesamöl, Mohnöl, Leimöl und Jojobaöl, von denen die nicht trocknenden Öle bevorzugt werden. Geeignet sind weiterhin beispielsweise Talk wie Rinder-, Hammel-, Ziegen- und Hirschtalk, Trane, und fettähnliche Stoffe wie Lanolin, Paraffin, Vaseline und/oder Wachse wie Bienenwachs.
Von diesen werden Lanolin, Bienenwachs, Kokosöl, Jojobaöl und Ricinusöl bevorzugt.

Die erfindungsgemäß enthaltenen Terpenlösungsmittel erleichtern das Aufziehen der Fettphase auf die Fasern beziehungsweise das Leder und wirken darüber hinaus als Konservierungsmittel. Geeignet sind beispielsweise Balsamterpentinöl, Orangenschalenöle und/oder Eukalyptusterpene.

Als Materialien auf der Grundlage organischer Säuren, können Substanzen eines Molekulargewichts ≧ 140, beispielsweise Kolophonium, Schellack, Dammarharz, Stearin und Fettsäuregemische, wie sie bei der Verseifung der Fettphase anfallen, eingesetzt werden. Verwendbar sind auch die Gemische obiger Mittel, bevorzugt werden solche, deren Schmelzpunkt über 35°C liegt, wie Kolophonium, Schellack und Stearin.

Wasser ist in einer Menge von 40 bis 95 % in der Emulsion enthalten, deren pH-Wert auf 7 bis 11, vorzugsweise 8 bis 10 eingestellt ist.

Die Emulsion kann darüber hinaus Hartwachse und Duftstoffe enthalten. Geeignete Hartwachse sind beispielsweise Carnauba-, Candelilla-, Schellack- und Espartowachs.
Sie können zur Glanzgebung in einer Menge von 0,1 bis 10 Gew.% enthalten sein. Als Duftstoffe kommen natürliche ätherische Öle insbesondere Lavendelöl oder Bergamotteöl in Frage.

Durch die erfindungsgemäß eingesetzten Bestandteile wird eine stabile Emulsion erhalten, die auch beim Waschen von Stoffen und Geweben als Bestandteil der Waschflotte eine Imprägnierung dieser Materialien bewirkt. Sie kann in einer Verdünnung von 1 : 100 oder unverdünnt eingesetzt werden.

Die Imprägnierung kann durch Auftragen der Emulsion mittels Bürste, Schwamm oder Tuch oder aber durch Besprühen der zu behandelnden Materialien mit der Emulsion oder Eintauchen dieser Materialien in die Emulsion erfolgen.

Zur Herstellung der erfindungsgemäßen Emulsionen werden zunächst die Materialien auf der Grundlage organischer Säuren wie Kolophonium, Schellack oder Dammarharz im Terpentinöl gelöst und dieses Gemisch mit der Fettphase verrührt, wobei die Lösung in kleinen Anteilen in die ggf. zuvor erwärmte Fettphase hineingegeben wird. Anschließend werden etwa bis zu 50 % der Fettphase an Wasser hinzugerührt und dieser Ansatz einige Stunden stehen gelassen. Danach wird der Rest der Wasserphase eingearbeitet und der pH-Wert eingestellt.

Vor allem bei größeren Ansätzen sollte (muß?) die erhaltene Emulsion homogenisiert werden, um den Zerteilungsgrad und die Verteilung der inneren Phase zu verbessern und die Stabilität zu erhöhen. Je nach Viskosität dienen dazu beispielsweise schnellaufende einfache Rührer, Rührer mit Rotor und Stator (Ultra Turrax), Kolloidmühlen mit Zahn- oder Korundscheiben, Homogenisatoren, die den Ansatz meist wiederholt durch eine Düse pressen, und Ultraschallgeräte.

Sollen zur Herstellung der erfindungsgemäßen Emulsionen Hartwachse verwendet werden, können diese gemeinsam mit den Materialien auf der Grundlage organischer Säuren im Terpentinöl gelöst werden. Die genannten Duftstoffe werden zu der flüssigen Fettphase gegeben bevor die übrigen Bestandteile hinzugemischt werden.

Zum Vergleich der erfindungsgemäßen Pflegemittel mit denen aus dem Stand der Technik wurde je ein Baumwollgewebestück identischer Herkunft mit der gleichen Menge einer erfindungsgemäßen sprühbaren Imprägnierung und einem Imprägnierungsmittel aus dem Stand der Technik besprüht. Im Falle der erfindungsgemäßen sprühbaren Imprägnierung erfolgte das Auftragen mit einem Pumpzerstäuber. Die so behandelten Baumwollappen wurden zwei Stunden an der Luft trocknen gelassen und die wasserabweisende Wirkung durch Auftragen von Wassertropfen mit Hilfe einer Pipette bestimmt. Die Zeit vom Auftragen des Wassertropfens bis zum Eindringen in das Gewebe wurde gemessen und dabei ermittelt, daß die erfindungsgemäße Imprägnierung der konventionellen Sprühimprägnierung überlegen war. Es wurde eine erhöhte wasserabweisende Wirkung von bis zu 70 % gemessen.

In lauwarmen, 5 Gew.% einer erfindungsgemäßen wasserabweisenden Imprägnierung enthaltendem Wasser wurde ein Baumwollappen etwa fünf Minuten lang bewegt und anschließend getrocknet. Auch bei dieser Auftragsmethode zeigte sich eine sehr gute wasserabweisende Wirkung im Vergleich zu einem nicht imprägnierten Baumwollappen. Dies ist auf den wesentlichen Vorteil der Wasserverdünnbarkeit der erfindungsgemäßen Mittel zurückzuführen.

Im Hauptwaschgang erfolgte die Behandlung eines Baumwollanoraks mit der erfindungsgemäßen wasserabweisenden Imprägnierung bei einer Wassertemperatur von 30°C. Nach dem Spülgang wurde der Anorak an der Luft getrocknet, weil nach Schleudern die Imprägnierung nachläßt. Nach Trocknen zeigte der Baumwollanorak ein ausgeprägtes hydrophobes Verhalten.

Zur weiteren Erläuterung sind nachfolgend drei Rezepturbeispiele für erfindungsgemäße Emulsionen gegeben.

| Sprühbare Imprägnierung | |
|---|---|
| Ricinusöl | 3,4 % |
| Lanolin | 5,6 % |
| Schellack | 1,2 % |
| Kolophonium | 2,8 % |
| Baisamterpentinöl | 8,0 % |
| Ammoniumhydrogencarbonat | 0,9 % |
| Wasser | 78,1 % |

| Glanzgebendes Pflegemittel | |
|---|---|
| Sesamöl | 2,5 % |
| Ricinusöl | 1,5 % |
| Baisamterpentinöl | 18,0 % |
| Bienenwachs | 6,0 % |
| Schellack | 2,9 % |
| Pflanzliches Stearin | 1,0 % |
| Kaliumcarbonat | 0,7 % |
| Carnaubawachs | 4,0 % |
| Schellackwachs | 0,2 % |
| Wasser | 63,2 % |

| Wasserabweisende Imprägnierung | |
|---|---|
| Sesamöl | 2,0 % |
| Saffloröl | 1,8 % |
| Jojobaöl | 1,0 % |
| Lanolin | 3,8 % |
| Kokosölfettsäure | 1,9 % |
| Kolophonium | 1,0 % |
| Dammarharz | 0,5 % |
| Orangenterpene | 7,5 % |
| Ammoniak 25 % | 1,2 % |
| Bienenwachs | 1,5 % |
| Wasser | 77,8 % |

## Patentansprüche

1. Wasserabweisende Imprägnieremulsion für Leder, Stoffe und Gewebe, gekennzeichnet durch 1 bis 15 Gew.% einer Fettphase, 1 bis 30 Gew.% einer oder mehrerer Substanzen auf der Grundlage organischer Säuren eines Molekulargewichts ≧ 140,
ausgewählt aus der Gruppe, enthaltend Kolophonium, Schellack, Dammarharz, Stearin und bei der Verseifung obiger Fettphasen und Harze entstehenden Fettsäuren sowie Fettsäuregemische, und Wasser.

2. Imprägnieremulsion nach Anspruch 1, dadurch gekennzeichnet, daß als Fettphase Jojobaöl, Lanolin, Bienenwachs, Kokosöl und Ricinusöl enthalten sind.

3. Imprägnieremulsion nach Anspruch 1 oder 2, dadurch gekennzeichnet, daß als Terpenlösungsmittel Balsamterpentinöl, Orangenschalenöle und/oder Eukalyptusterpene enthalten sind.

4. Imprägnieremulsion nach einem der Ansprüche 1 bis 3, dadurch gekennzeichnet, daß als Materialien auf der Grundlage organischer Säure solche enthalten sind, die keiner Autoxidation unterliegen und deren Schmelzpunkt über 35°C liegt.

5. Imprägniergemisch nach Anspruch 4, dadurch gekennzeichnet, daß Kolophonium, Schellack, Stearin und/oder Kokosölfettsäure enthalten sind.
